# EUROPÄISCHE PATENTANMELDUNG

(11) **EP 1 477 369 A1**
(43) Veröffentlichungstag der Anmeldung: **17.11.2004**
(21) Anmeldenummer: 04011633.7
(22) Anmeldetag: 17.05.2004
(51) Int. Cl.: B60R 16/02

(54) **Verfahren zur Durchführung einer Fahrzeug-Reparatur**

(30) Priorität: 16.05.2003 DE 10322184; 10.09.2003 DE 10341640
(71) Anmelder: Mahncke, Fritz, 48159 Münster (DE)
(72) Erfinder: Mahncke, Fritz, 48159 Münster (DE)
(74) Vertreter: Habbel, Lutz, Dipl.-Ing.

(57) **Zusammenfassung**

Bei einem Verfahren zur Durchführung einer Reparatur an einem als Pannenfahrzeug bezeichneten Fahrzeug, wobei mittels einer Diagnose- und / oder Reparatur-Software ein Fehler in der Elektronik des Pannenfahrzeugs aufgefunden und / oder behoben wird, schlägt die Erfindung vor, dass die Software nach der Reparatur deaktiviert wird, und dass die Elektronik des Pannenfahrzeugs nur für ein vorbestimmtes sogenanntes Nutzungsfenster, welches zeitlich oder räumlich begrenzt ist, in einen funktionsfähigen Zustand versetzt wird.

## Beschreibung

Die Erfindung betrifft ein Verfahren nach dem Oberbegriff des Anspruchs 1.

Derartige Verfahren sind aus der Praxis bekannt. Dabei steht die möglichst vollständige Instandsetzung des Fahrzeugs im Vordergrund, oder zumindest die möglichst vollständige Behebung des zu reparierenden Fehlers, sodass gattungsgemäße Reparaturen beispielsweise in Fachwerkstätten durchgeführt werden.

Bei der modernen Fahrzeugelektronik sind viele Fehler, die zu einem Mobilitätsverlust des Fahrzeugs führen, durch sogenannte Reparatur- oder Notlaufprogramme überbrückbar, sodass auch ohne eine vollständige Wiederherstellung der den Fehler aufweisenden Fahrzeugelektronik das Fahrzeug mit einem Notlaufprogramm - also mit einem eingeschränkten Funktionsumfang der elektrischen bzw. elektronischen Komponenten - wieder fahrbereit ist. Dies betrifft insbesondere die Motorsteuerung, wo behelfsmäßige Zünd-Kennlinien oder Einspritzmengen-Kennlinien verwendet werden können, um das Fahrzeug - zwar suboptimal aber fahrfähig - wieder mobil zu machen.

In der Praxis besteht das Problem, dass die Fahrzeughersteller bestrebt sind, die erforderliche Software zur Reparatur der Fahrzeugelektronik möglichst ausschließlich ihren Vertragswerkstätten zur Verfügung zu stellen, da die Software einen erheblichen wirtschaftlichen Wert darstellt und daher möglichst nicht fremdgenutzt werden soll.

Dies führt in der Praxis dazu, dass bei Mobilitätsverlust aufgrund eines Fehlers in der Fahrzeugelektronik das betroffene Fahrzeug bis zur nächsten Werkstatt abgeschleppt werden muss. Die Durchführung der Fahrzeug-Reparatur umfasst daher nicht nur die eigentlichen Reparaturarbeiten sondern auch den mit erheblichen Kosten verbundenen Abschleppvorgang, für den insofern ein erheblicher technischer Aufwand betrieben werden muss, als ein spezielles Abschleppfahrzeug bereitgestellt werden muss.

Der Erfindung liegt die Aufgabe zugrunde, ein Verfahren zur Durchführung einer Fahrzeug-Reparatur zu schaffen, welches eine kostensparende Durchführung der Reparatur mit vergleichsweise einfachen technischen Mitteln ermöglicht.

Diese Aufgabe wird durch ein Verfahren mit den Merkmalen des Anspruchs 1 gelöst.

Der vorliegende Vorschlag betrifft insbesondere die Durchführung des vorgeschlagenen Verfahrens, wobei derzeit allgemein bekannte und verbreitete technische Einrichtungen benutzt werden können, so dass nicht im Detail auf diese technischen Einrichtungen eingegangen wird. Bei allgemein gehaltenen Formulierungen wie "das Pannenfahrzeug ruft eine Notfall-Zentrale an" oder "das Pannenfahrzeug übermittelt fahrzeugspezifische Daten" wird vorausgesetzt, dass dem Fachmann die Hilfsmittel bekannt sind, um z. B. mittels eines Mobilfunknetzes einen Aufbau einer Datenübertragungsverbindung zwischen einer Sende- und / oder Empfangs-Einrichtung, die am Pannenfahrzeug installiert ist, und einer Sende- und / oder Empfangs-Einrichtung, die in der Notfall-Zentrale installiert ist, zu ermöglichen und Daten aus z. B. einem Datenspeicher auszulesen und zu übertragen, welcher in der Elektronik des Pannenfahrzeugs vorgesehen ist.

Die Erfindung geht von der überraschenden Überlegung aus, die Reparatur bewußt nicht möglichst vollständig durchführen zu lassen, sondern mit einer Einschränkung durchzuführen, die lediglich ein vorbestimmtes "Nutzungsfenster" öffnet, welches die Mobilität des Fahrzeugs innerhalb bestimmter räumlicher oder zeitlicher Grenzen sichert. Dieses Nutzungsfenster ermöglicht es dem Fahrer des Pannenfahrzeugs, die nächstgelegene Fachwerkstatt aufzusuchen, wo dann die endgültige Reparatur der Fahrzeugelektronik vorgenommen werden kann. Dementsprechend wird nachfolgend von einer "Notreparatur" gesprochen, welche das Fahrzeug lediglich behelfsweise und im Rahmen des Nutzungsfensters wieder mobil macht. Ähnliche mit einer Einschränkung durchzuführende Maßnahmen sind von den erwähnten Notlaufprogrammen bekannt, die fest in der Fahrzeugelektronik programmiert sind. Überraschend ist, in ähnlicher Weise eine Not-Reparatur durchzuführen, wenn das Pannenfahrzeug von Reparaturpersonal repariert wird.

Durch die beschränkte Mobilität im Rahmen des Nutzungsfensters wird sichergestellt, dass die endgültige Reparatur der Fahrzeugelektronik möglichst bald vorgenommen wird. Technische Schäden am Fahrzeug selbst oder Umweltbelastungen durch erhöhte Emissionen oder erhöhten Kraftstoffverbrauch des Pannenfahrzeugs in Folge des Fehlers der Fahrzeugelektronik werden auf diese Weise vermieden bzw. so gering wie möglich gehalten.

Die dazu erforderliche Reparatur-Software kann mit einfachen technischen Mitteln bereitgestellt werden, z. B. mittels handelsüblicher tragbarer Computer wie z. B. Notebook- oder Laptop-Computer.

Angesichts der weiten Verbreitung derartiger oder ähnlicher, die Reparatur-Software bereitstellender Geräte kann diese Reparaturmöglichkeit - obwohl sie "High-Tech"-Gerät verwendet - als technisch einfacher angesehen werden als die Bereitstellung eines "Low-Tech"-Abschleppwagens, der im wesentlichen lediglich das eigentliche Fahrzeug sowie eine Abschleppeinrichtung aufweist.

Zudem kann ein Reparatur-Fahrzeug in Form eines PKWs verwendet werden, welches im Vergleich zu einem Abschleppwagen in Form eines LKWs erheblich kleiner ist und daher:
erstens aufgrund geringeren Gewichts, geringeren Windwiderstandes und einer eventuell schwächeren Motorisierung weniger Kraftstoff verbraucht,
zweitens schneller fahren und dementsprechend schneller am Pannenfahrzeug ankommen kann, beispielsweise wenn das Pannenfahrzeug über Landstraße oder Autobahn erreichbar ist, und
drittens aufgrund geringerer Fahrzeugabmessungen auch schlechter erreichbare Pannen-Standorte leichter erreichen kann, z. B. eng bebaute, verkehrsberuhigte Zonen in Wohngebieten, oder dicht beparkte und stark befahrene Straßen in innerstädtischen Bereichen.

Das vorerwähnte Nutzungsfenster kann z. B. durch eine Auswertung der Tachosignale überwacht werden, was selbst bei älteren Fahrzeugen problemlos möglich ist, so dass eine vorbestimmte Maximalstrecke zurückgelegt werden kann, bevor die Fahrzeugelektronik deaktiviert wird.

Alternativ kann das Nutzungsfenster z. B. durch eine Auswertung von GPS-Signalen überwacht werden, z. B. wenn das Fahrzeug mit einer die Fahrzeugposition meldenden Alarmanlage oder mit einem Navigationssystem ausgestattet ist, so dass das Fahrzeug innerhalb eines vorbestimmten Gebiets oder entlang einer vorbestimmten Strecke bewegt werden kann, bevor die Fahrzeugelektronik deaktiviert wird.

Alternativ kann das Nutzungsfenster z. B. durch eine Zeit-Auswertung überwacht werden, was selbst bei älteren Fahrzeugen problemlos möglich ist, sofern sie mit einer Uhr ausgesattet sind, so dass das Fahrzeug während einer vorbestimmten Zeitdauer bewegt werden kann, bevor die Fahrzeugelektronik deaktiviert wird.

Weiterhin schlägt die Erfindung vor, dass die fahrzeugspezifische Reparatur-Software nach der Notreparatur deaktiviert wird. Durch diese Maßnahme ist für den Fahrzeughersteller sichergestellt, dass seine herstellerspezifische bzw. fahrzeugspezifische Software nicht missbräuchlich verwendet wird. Sie muss vielmehr für jeden speziellen Einsatz erneut aktiviert werden, beispielsweise mittels eines jedesmal neuen Freischaltcodes, der von einer Notfallzentrale, einer Einsatz-Leitstelle oder vom Fahrzeug-Hersteller vergeben wird. Zudem ist eine fachgerechte Reparatur des Pannenfahrzeugs durch die Fachwerkstatt aufgrund des lediglich freigeschalteten Nutzungsfensters sichergestellt.

Zusätzlich zu den oben genannten technischen Vorteilen des vorgeschlagenen Verfahrens ergeben sich folgende Vorteile:
Für den Pannendienst: dass er nicht mit einem Abschleppfahrzeug zum Pannenfall fahren muss, sondern dass ein kleineres und damit kostengünstigeres Service-Fahrzeug für die Notreparatur ausreichen kann.
Für den Fahrer des Pannenfahrzeugs: dass sein Fahrzeug nicht abgeschleppt werden muss, sodass der Zeitverlust, der durch die Panne bedingt wird, minimiert wird.
Schließlich ergibt sich der wirtschaftliche Vorteil, dass die Abschleppkosten eingespart werden können, was beispielsweise den Versicherer einer Mobilitätsgarantie oder den Fahrer des Pannenfahrzeugs oder bei etwaigen Garantiefällen den Fahrzeughersteller entlastet.

Vorzugsweise kann die Deaktivierung der Reparatur-Software automatisch erfolgen, wenn die Software vom Pannenfahrzeug getrennt wird bzw. eine Datenverbindung zwischen der Software und dem Pannenfahrzeug unterbrochen wird. Auf diese Weise ist sichergestellt, dass nach Reparatur des Pannenfahrzeugs keine anschließende, missbräuchliche Benutzung der Software möglich ist.

Vorteilhaft kann das Pannenfahrzeug dadurch möglichst sicher und schnell aufgefunden werden, dass der Standort des Pannenfahrzeugs automatisch bestimmt wird. Unsicherheiten in der Positionsbestimmung, die beispielsweise bei einer mündlichen Durchgabe des Standortes durch den Fahrer des Pannenfahrzeuges auftreten könnten, sind dadurch ausgeschlossen, insbesondere, wenn sich dieser Fahrer in einer ihm unbekannten Umgebung aufhält.

Dabei kann beispielsweise in an sich bekannter Weise GPS-gestützt vom Pannenfahrzeug aus die Übertragung von Positionsdaten vorgesehen sein, wie dies beispielsweise auch aus dem Bereich von Diebstahl-Warneinrichtungen bekannt ist: ein am Pannenfahrzeug vorgesehener GPS-Empfänger ermöglicht die Positionsbestimmung des Pannenfahrzeug, und eine fest am Fahrzeug vorgesehene Mobilfunkeinrichtung übermittelt diese Positionsdaten an eine Notrufzentrale übermittelt, deren Mobilfunknummer Mobilfunkeinrichtung fest in der fahrzeugseitigen Mobilfunkeinrichtung gespeichert ist.

Die Übertragung der Positionsdaten kann direkt vom Pannenfahrzeug zu einer Einstz-Leitstelle erfolgen, welche die Einsätze von Reparatur-Fahrzeugen koordiniert, oder indirekt, wenn beispielsweise die Positionsdaten zunächst vom Pannenfahrzeug an den Fahrzeughersteller übermittelt werden und dieser dann die Daten auswertet. Sofern es sich nicht um einen Diebstahlalarm handelt, sondern um einen technischen Notfall, können diese Positionsdaten vom Fahrzeughersteller an die Einstz-Leitstelle weitergeleitet werden. Die Unterscheidung zwischen Diebstahl einerseits und technischer Panne andererseits kann automatisch durch die Fahrzeugelektronik des Pannenfahrzeugs erfolgen.

Es kann vorgesehen sein, dass das Fahrzeug bei Erkennen eines Fehlers in der Fahrzeug-Elektronik automatisch immobilisiert wird und ein entsprechender Technischer-Notfall-Alarm automatisch durch die Überwachungselektronik des Fahrzeugs ausgesendet wird.

Alternativ zu der vorgenannten "aktiven" Positionsbestimmung, bei welcher vom Pannenfahrzeug aus dessen Position mitgeteilt wird, kann eine "passive" Positionsbestimmung seitens der Notfallzentrale erfolgen, bei welcher der Notruf eingeht, um den Standort des Pannenfahrzeugs zu bestimmen. Wenn sich beispielsweise der Fahrer des Pannenfahrzeugs mittels eines Mobiltelefons bei der Notfallzentrale meldet, so kann im Rahmen einer so genannten "Zell-Ortung" eine Positionsbestimmung des Mobiltelefons dadurch erfolgen, dass üblicherweise mehrere Mobilfunkzellen ein Signal von diesem Mobilfunktelefon erhalten, sodass die Auswertung der Feldstärken der einzelnen Zellen zu einer ausreichend genauen Positionsbestimmung des Standortes führen kann.

Auch im Fahrzeug selbst kann fest eingebaut eine Mobilfunkeinheit vorgesehen sein, beispielsweise als fest eingebautes Mobiltelefon oder im Rahmen einer Diebstahl-Alarmeinrichtung, wobei diese genannten Mobilfunkeinheiten jeweils ebenfalls ein Mobilfunknetz nutzen, sodass die Zellortung durchgeführt werden kann. Das Gleiche gilt für Mobilfunkeinrichtungen, die sich nahe bei dem Pannenfahrzeug befinden, beispielsweise von anderen Verkehrsteilnehmern, Passanten oder dergleichen: wenn mittels einer derartigen Mobilfunkeinrichtung eine Mobilfunkverbindung zu der Notfallzentrale aufgebaut wird, so kann im Rahmen der Zell-Ortung eine Positionsbestimmung dieser jeweiligen Mobilfunkeinrichtung erfolgen, und aufgrund deren Nähe zum Pannenfahrzeug gilt dies als Positionsbestimmung des Standortes des Pannenfahrzeugs. Je nach Mobilfunk-Dienstanbieter und je nach Mobilfunktechnik können auch andere Ortungstechniken genutzt werden.

Vorteilhaft wird die Software am Servicefahrzeug durch eine Leitstelle freigeschaltet, sodass durch die Leitstelle gesteuert werden kann, wann das jeweilige Servicefahrzeug auf eine herstellerspezifische Software eines Fahrzeugherstellers zugreifen kann. In Abhängigkeit von dem zuvor eingegangenen Notruf, der beispielsweise Angaben üder den Fahrzeugtyp des Pannenfahrzeugs enthält, kann nur die jeweils fahrzeugtypische Software freigeschaltet werden, sodass ein missbräuchlicher Zugriff auf die Software der Fahrzeughersteller zwischen den eigentlichen Reparaturzeiten ausgeschlossen ist.

Insbesondere kann die Zeit zwischen der Freischaltung und der Deaktivierung der Software automatisch erfasst werden, wobei die für die Diagnose und Notreparatur erforderliche Zeitspanne statistisch ausgewertet werden kann. Ausgehend von durchschnittlich erforderlichen Zeiten für die Durchführung einer Notreparatur kann diese statistische Überwachung Anhaltspunkte dafür liefern, ob eine ordnungsgemäße Notreparatur durchgeführt wurde oder ob möglicherweise missbräuchlich - beispielsweise über einen besonders langen Zeitraum - auf die Software zugegriffen wurde.

Die automatische Zeiterfassung kann insbesondere zur Vereinfachung des Abrechnungsverfahrens herangezogen werden:
wenn die Einsätze der Reparatur-Fahrzeuge mehrerer Serviceunternehmen von derselben Einsatz-Leitstelle koordiniert werden, kann abhängig von den erfassten Reparaturzeiten dem jeweiligen Serviceunternehmen eine entsprechende Vergütung ausgezahlt werden, sodass aufgrund der automatischen Zeiterfassung eine ebenfalls automatische Abrechnung für dieses Serviceunternehmen erstellt werden kann, z. B. durch die vorerwähnte Leitstelle.

Das Nutzungsfenster kann ebenfalls automatisch berechnet werden, beispielsweise anhand einer Liste des Fahrzeugherstellers, die in Form einer Datenbank hinterlegt ist. Diese Liste kann sämtliche Fachwerkstätten des Fahrzeugherstellers enthalten, mit ihrer jeweiligen Ortsangabe. Weiterhin kann die Datenbank gegebenenfalls Informationen enthalten, dass bestimmte Werkstätten auf bestimmte Fahrzeugtypen des betreffenden Herstellers spezialisiert sind. In Abhängigkeit von der Eingabe des Standortes des Pannenfahrzeugs kann daher auf diese Liste zugegriffen werden, sodass datenbankgestützt automatisch der nächstgelegene für dieses Pannenfahrzeug geeignete Fachbetrieb ausgewählt und das Nutzungsfenster entsprechend bestimmt wird. So ist sichergestellt, dass dieser Fachbetrieb aufgesucht werden kann, so dass beispielsweise die entsprechende Entfernung oder ein entsprechendes Gebiet oder Zeitfenster als Nutzungsfenster freigeschaltet wird, sodass dieses Nutzungsfenster dem Fahrer des Pannenfahrzeugs ermöglicht, diese spezielle Werkstatt aufzusuchen.

Das erfindungsgemäße Verfahren wird anhand des nachfolgenden Ablaufs beispielhaft beschrieben. Die einzelnen Schritte dieses Ablaufs sind nach der zeitlichen Abfolge numeriert.

### 1) Annahme eines Reparaturauftrags:

Wenn ein Fahrer eines nachfolgend als "Pannenfahrzeug" beschriebenen Fahrzeugs eine Panne hat, insbesondere eine Panne im Bereich der Fahrzeugelektronik, so wird eine Notfallnummer angerufen. Dies kann automatisch von einem fahrzeugeigenen Überwachungs- und Meldesystem erfolgen, welches den Fehler erkannt hat, oder durch einen Telefonanruf des Fahrers.

Diese Notfallnummer kann die Telefonnummer einer als "Leitstelle" bezeichneten Einrichtung sein, welche den Einsatz von Reparatur- bzw. Servicefahrzeugen koordiniert. Es kann aber auch eine Notfallnummer im Werk des Fahrzeugherstellers sein. Es kann auch vorgesehen sein, dass diese vom Hersteller des Fahrzeugs ausgegebene Notfallnummer im Werk des Herstellers aufläuft, dort jedoch weitergeschaltet wird, beispielsweise zu der völlig unabhängig vom Herstellerwerk eingerichteten Unternehmung, welche die Servicefahrzeuge koordiniert, z.B. zu der vorgenannten Leitstelle.

### 2) Auffinden des Pannenfahrzeugs:

Nun wird der Standort des Pannenfahrzeugs bestimmt. Der Fahrer des Pannenfahrzeugs kann den Standort dabei mündlich durchgeben, oder es kann die vorerwähnte automatische Positionsbestimmung erfolgen, beispielsweise per GPS oder Zell-Ortung, und zwar entweder "aktiv" durch ein fahrzeugeigenes System im Pannenfahrzeug oder "passiv" von der Leitstelle aus.

### 3) Auffinden eines Servicefahrzeugs:

Anhand der Positionsbestimmung des Pannenfahrzeugs wird von der Leitstelle aus das nächste Servicefahrzeug geortet und mit der Reparatur des Pannenfahrzeugs beauftragt.

Als "Ortung" des nächsten Servicefahrzeugs kann im einfachsten Fall vorgesehen sein, dass das dem Pannenstandort nächst ansässige Serviceunternehmen benachrichtigt wird.

Es kann jedoch auch vorgesehen sein, dass sämtliche durch die Leitstelle koordinierte Servicefahrzeuge ihre jeweilige Position an die Leitstelle übermitteln, z. B. GPS-gestützt. Derartige Positionsmeldungen können permanent oder in regelmäßigen, z.B. ein- oder mehrminütigen zeitlichen Intervallen automatisch von den Servicefahrzeugen zur Leitstelle übermittelt werden, oder wenn sich ein Servicefahrzeuge mehr als eine vorbestimmte Wegstrecke von seiner zuletzt gemeldeten Position entfernt hat. Alternativ kann vorgesehen sein, dass die Positionsmeldungen von der Leitstelle bei Bedarf automatisch im Rahmen einer sogenannten "Polling-Funktion" abgefragt werden, z.B. durch Aussenden eines Aufforderungs-Signals von der Leitstelle, woraufhin von den Servicefahrzeugen die einzelnen Positionsmeldungen an die Leitstelle übermittelt werden.

### 4) Übernahme des Reparaturauftrags durch das Servicefahrzeug:

Von der Leitstelle werden die erforderlichen Daten, z. B. die Position des Pannenfahrzeugs, an das für die Notreparatur ausgewählte Servicefahrzeug übermittelt.

Der Auftrag zur Durchführung der Notreparatur wird der Leitstelle bestätigt, entweder durch den Fahrer des Servicefahrzeugs oder automatisch nach Erhalt der vorgenannten Daten.

Sollte sich das von der Leitstelle ausgewählte Servicefahrzeug momentan in einem anderweitigen Einsatz befinden, so erfolgt eine entsprechende Rückmeldung an die Leitstelle, dass dieses Servicefahrzeug nicht einsatzbereit für einen neuen Auftrag ist, sodass nun entweder an das zweitnächste, zuvor geortete Servicefahrzeug die erforderlichen Daten, z. B. die Position des Pannenfahrzeugs, an das für die Notreparatur ausgewählte Servicefahrzeug übermittelt werden könnne, oder der vorerwähnte Verfahrensschritt der Ortung des nächsten Servicefahrzeugs durch die Leitstelle erneut vorgenommen werden kann, bis das Servicefahrzeug ermittelt ist, welches dem Pannenfahrzeug am nächsten und einsatzbereit ist.

Dieser Auswahlprozeß kann durch Gespräche zwischen der Leitstelle und den Fahrern der einzelnen Servicefahrzeuge durchgeführt werden. Es kann jedoch auch eine automatische Durchführung dieses Vorgangs vorgesehen sein, indem z. B. am Servicefahrzeug - beispielsweise durch Betätigung eines entsprechenden Schalters - ein Signal "nicht einsatzbereit" gesetzt werden kann, welches automatisch an die Leitstelle übermittelt wird, entweder gemeinsam mit den regelmäßig übermittelten Positionsmeldungen des Servicefahrzeugs oder im Rahmen der vorgenannten "Polling-Funktion" als Antwort auf das Aufforderungs-Signal der Leitstelle.

Alternativ zur Durchführung des vorbeschriebenen Auswahlprozesses kann vorgesehen sein, dass ein Servicefahrzeug, welches sich momentan in einem anderweitigen Einsatz oder aus anderen Gründen nicht einsatzbereit befindet, erst gar nicht am Ortungsverfahren gemäß Schritt 3) teilnimmt. Hierzu kann z. B. eine entsprechende Einrichtung am Servicefahrzeug deaktiviert werden, welche ansonsten im aktiven Zustand z. B. die Positionsangaben des Servicefahrzeugs an die Leitstelle übermittelt.

### 5) Kontakt zwischen dem Service- und dem Pannenfahrzeug:

Das Servicefahrzeug wird nun zum Pannenfahrzeug gefahren.

Spätestens unmittelbar vor dem Beginn der eigentlichen Notreparatur, also vor dem Anschluß der Reparatur-Software an die Elektronik des Pannenfahrzeugs, ist die Angabe des speziellen Fahrzeugtyps des Pannenfahrzeugs erforderlich. Dies kann gegebenenfalls durch den Servicetechniker erfolgen, wenn dieser mit seinem Servicefahrzeug beim Pannenfahrzeug angekommen ist.

Gegebenenfalls können die entsprechenden Fahrzeugdaten jedoch auch bereits vorher telefonisch durchgegeben worden sein, beispielsweise wenn der Fahrer des Pannenfahrzeugs die Notfallnummer anruft. Bei einer automatisierten Notfallmeldung eines fahrzeugeigenen Überwachungs- und Meldesystems kann dieses die abgespeicherten, genauen Fahrzeugdaten automatisch mit übermitteln.

### 6) Freischaltung der Reparatur-Software:

Spezifisch auf die jeweiligen Fahrzeugdaten abgestimmt wird die entsprechende Software im Servicefahrzeug freigeschaltet. Es kann also einerseits die entsprechende Software des jeweiligen Fahrzeugherstellers freigeschaltet werden und gegebenenfalls, wenn der Fahrzeughersteller mehrere Reparatur-Softwareprogramme für die unterschiedlichen Fahrzeugtypen bereitstellt, die für das jeweilige Pannenfahrzeug erforderliche Software.

Die Freischaltung der Software kann zwar grundsätzlich bereits bei der Annahme eines Reparaturauftrags gemäß Schritt 1) erfolgen, oder zu einem beliebeigen Zeitpunkt seitdem. Vorteilhaft erfolgt die Freischaltung jedoch möglichst kurzfristig vor der eigentlichen Reparaturmaßnahme, sodass missbräuchliche Zugriffe auf die Software möglichst ausgeschlossen sind. Es kann daher vorgesehen sein, dass die Software erst freigeschaltet wird, wenn eine Verbindung zur Datenübertragung zwischen der entsprechenden, die Software enthaltenden Einrichtung (auch als Reparatur-"Werkzeug" bezeichnet) des Service-Fahrzeugs (wie z. B. einem Laptop) und der Elektronik des Pannenfahrzeugs hergestellt worden ist, z. B. eine elektrische, drahtgebundene Kontaktierung oder eine drahtlose Verbindung mittels Infrarotoder Bluetooth-Schnittstellen.

Eine automatische Zeiterfassung der Reparatur-Zeitdauer startet mit Beginn der Freischaltung der Software, so dass anschließend abhängig von dieser Reparaturzeit die Abrechnung gegenüber dem Service-Dienstleister erstellt werden kann.

### 7) Durchführung der Notreparatur und Bestimmung eines Nutzungsfensters:

Bei der Notreparatur der Fahrzeugelektronik durch die Diagnose- und / oder Reparatur-Software wird die Fahrzeugelektronik lediglich begrenzt restauriert, nämlich für ein vorgegebenes Nutzungsfenster.

Dabei kann vorgesehen sein, dass bereits die herstellerseitige Software über ein Verzeichnis der Vertragswerkstätten verfügt, sodass bei Anschluss der Software an das Pannenfahrzeug der spezielle Fahrzeugtyp ermittelt werden kann und die für diesen Fahrzeugtyp geeignete, nächstgelegene Werkstatt ausgewählt werden kann.

Wenn die Positionsdaten des Pannenfahrzeugs aus Schritt 2) elektronisch erfaßt sind, kann ausgehend von diesem Pannenstandort die Funktionsfähigkeit der Fahrzeugelektronik automatisch für eine vorgegebene Fahrstrecke oder ein vorgegebenes Gebiet - unabhängig von der zurückgelegten Wegstrecke - freigeschaltet werden, oder es kann für eine vorgesehene, ausreichende Zeitdauer die Freischaltung der Fahrzeugelektronik erfolgen, so dass jeweils das Aufsuchen der ausgewählten Vertragswerkstatt möglich ist.

Alternativ zu dieser automatisierten Bestimmung kann das Nutzungsfenster durch den Servicetechniker bestimmt werden, z. B. besonders einfach in Form einer Wegstrecke oder einer Zeitdauer, was insbesondere den Vorteil bietet, dass die herstellerseitige Software keine entsprechende Datenbank mit den Vertragswerkstätten enthalten muss.

### 8) Automatische Deaktivierung der Reparatur-Software:

Bei Entkopplung vom Pannenfahrzeug, also bei Abbau der vorgenannten Verbindung zur Datenübertragung, wird die Software automatisch deaktiviert. Bei missbräuchlicher Benutzung der Software ergibt sich daher, dass anschließend die eigentliche Reparatur eines Pannenfahrzeugs nicht mehr möglich ist, und umgekehrt wird anschließend an eine Reparatur eines Pannenfahrzeugs die Software deaktiviert, sodass anschließend keine zusätzliche, missbräuchliche Benutzung mehr möglich ist.

### 9) Automatische Abrechnung:

Wenn das Diagnose- und Reparatur-Werkzeug des Servicefahrzeugs vom Pannenfahrzeug abgekoppelt wird, wird automatisch die Software des Fahrzeugherstellers am Servicefahrzeug wieder deaktiviert. Hiermit wird die automatisch erfasste Zeitdauer für die Nutzung der Software beendet. Diese Zeitdaten werden in der Leitstelle registriert, sodass dort automatisch die Abrechnung für den Service-Dienstleister erfolgen kann.

Diese Abrechnung berücksichtigt einerseits die Reparaturdauer in Form der Freischaltungsdauer der Fahrzeug-Hersteller-Software und kann zudem entweder eine Pauschale für An- und Abfahrt des Servicefahrzeugs beinhalten oder eine genaue, entfernungsabhängige Fahrtkostenerstattung. Wenn die Ortung des Servicefahrzeugs automatisch erfolgt, beispielsweise GPS-gestützt oder durch Zellortung von Mobilfunkeinrichtungen, kann die genaue, entfernungsabhängige Fahrtkostenerstattung problemlos und automatisch in die Abrechnung einfließen, denn in beiden Fällen ist ein vergleichsweise genauer Standort des Servicefahrzeuges bekannt, wenn dieses mit der Durchführung der Reparatur beauftragt wird, sodass die Anfahrt bis zum Pannenfahrzeug für die automatische Abrechnungserstellung ausgewertet werden kann.

## Patentansprüche

1. Verfahren zur Durchführung einer Reparatur an einem als Pannenfahrzeug bezeichneten Fahrzeug,
wobei mittels einer Diagnose- und / oder Reparatur-Software ein Fehler in der Elektronik des Pannenfahrzeugs aufgefunden und / oder behoben wird,
**dadurch gekennzeichnet,**
**dass** die Software nach der Reparatur deaktiviert wird,
und **dass** die Elektronik des Pannenfahrzeugs nur für ein vorbestimmtes sogenanntes Nutzungsfenster, welches zeitlich oder räumlich begrenzt ist, in einen funktionsfähigen Zustand versetzt wird.

2. Verfahren nach Anspruch 1,
**dadurch gekennzeichnet,**
**dass** die Software automatisch deaktiviert wird, wenn eine Datenverbindung zwischen der Software und dem Pannenfahrzeug getrennt wird.

3. Verfahren nach Anspruch 1 oder 2,
**dadurch gekennzeichnet,**
**dass** der Standort des Pannenfahrzeugs vor Beginn der Reparatur automatisch bestimmt wird.

4. Verfahren nach Anspruch 3,
**dadurch gekennzeichnet,**
**dass** der Standort des Pannenfahrzeugs durch Zellortung eines Mobilfunkteilnehmers innerhalb des Mobilfunknetzes ermittelt wird,
wobei als Mobilfunkteilnehmer eine dem Pannenfahrzeug nahe Mobilfunkeinrichtung verwendet wird - wie eine an dem Pannenfahrzeug vorgesehene Notruf-Sende-Einheit, ein im Pannenfahrzeug oder im Reparaturfahrzeug vorhandenes Mobiltelefon, oder ein Mobiltelefon Person, welche sich in der Nähe des Pannenfahrzeugs befindet.

5. Verfahren nach Anspruch 3,
**dadurch gekennzeichnet,**
**dass** der Standort des Pannenfahrzeugs mittels einer GPSgestützten Positionsbestimmung ermittelt wird.

6. Verfahren nach einem der Ansprüche 3 bis 5,
**dadurch gekennzeichnet,**
**dass** mittels einer am Pannenfahrzeug vorgesehenen Sende-Einheit - wie einer Mobilfunkeinrichtung - die zuvor bestimmten Positionsdaten vom Pannenfahrzeug drahtlos an eine Notrufzentrale übermittelt werden.

7. Verfahren nach Anspruch 4,
**dadurch gekennzeichnet,**
**dass** eine Mobilfunkverbindung von dem Mobilfunkteilnehmer zu einer Notrufzentrale aufgebaut wird,
und **dass** der durch Zellortung bestimmte Standort des Pannenfahrzeugs über die Mobilfunkverbindung zur Notrufzentrale übermittelt wird - wie durch Übertragung der Positionsdaten.

8. Verfahren nach einem der vorhergehenden Ansprüche,
**dadurch gekennzeichnet,**
**dass** die Software durch eine Leitstelle freigeschaltet wird, und dass die Zeitdauer von der Freischaltung bis zur Deaktivierung der Software automatisch erfasst wird.

9. Verfahren nach Anspruch 8,
**dadurch gekennzeichnet,**
**dass** automatisch und in Abhängigkeit von der Freischaltungsdauer der Software eine Abrechnung erstellt wird.

10. Verfahren nach einem der vorhergehenden Ansprüche,
**dadurch gekennzeichnet,**
**dass** die Elektronik des Pannenfahrzeugs für das Nutzungsfenster in einen funktionsfähigen Zustand mit eingeschränktem Funktionsumfang versetzt wird.

11. Verfahren nach einem der vorhergehenden Ansprüche,
**dadurch gekennzeichnet,**
**dass** die nachfolgenden Verfahrensschritte nacheinander ausgeführt werden:
■ Annahme eines Reparaturauftrags bei einer Leitstelle,
■ Auffinden des Pannenfahrzeugs,
■ Auffinden eines Servicefahrzeugs,
■ Übernahme des Reparaturauftrags durch das Servicefahrzeug,
■ Kontakt zwischen der die Reparatur-Software aufweisenden Einrichtung des Servicefahrzeugs und der Fahrzeugelektronik des Pannenfahrzeugs,
■ Freischaltung der Reparatur-Software,
■ Durchführung der Notreparatur und Bestimmung eines zeitlich und / räumlich begrenzten Nutzungsfensters, und
■ Automatische Deaktivierung der Reparatur-Software nach erfolgter Notreparatur oder nach Abkopplung der die Reparatur-Software aufweisenden Einrichtung des Servicefahrzeugs von der Fahrzeugelektronik des Pannenfahrzeugs.
